# EUROPEAN PATENT SPECIFICATION

(11) **EP 2 860 088 B1**
(45) Date of publication and mention of the grant of the patent: **04.10.2017**
(21) Application number: 14179951.0
(22) Date of filing: 06.08.2014
(51) Int. Cl.: B62J 6/02, B62J 15/00, B62J 17/02

(54) **Saddle riding type vehicle**
Sattelfahrzeug
Véhicule de type à selle

(30) Priority: 09.10.2013 JP 2013212054
(43) Date of publication of application: 15.04.2015
(73) Proprietor: Yamaha Hatsudoki Kabushiki Kaisha, Iwata-shi, Shizuoka 438-8501 (JP)
(72) Inventor: Ishihara, Eiki, Shizuoka-ken, Shizuoka 438-0026 (JP)
(74) Representative: Grünecker Patent- und Rechtsanwälte PartG mbB

(56) References cited:
- EP-A1- 1 612 131
- EP-A1- 2 390 170
- JP-U- S58 135 386

## Description

### BACKGROUND OF THE INVENTION

### (1) Field of the Invention

This invention relates to a saddle riding type vehicle, and more particularly to a technique of mounting construction such as for an upper fender.

### (2) Description of the Related Art

Conventionally, a saddle riding type vehicle having a lower fender and an upper fender is known. The lower fender is disposed above a front wheel. The upper fender is disposed above the lower fender. The upper fender is supported by a head tube. A pair of right and left front side cowls are attached to the upper fender. The front side cowls cover side surfaces of a fuel tank. The upper fender and front side cowls are continuous to form a streamline shape.

The upper fender and front side cowls guide streams of air smoothly backward to reduce air resistance at times of traveling of the saddle riding type vehicle (as disclosed in Japanese Unexamined Patent Publication No. 2010-13065, for example).

EP 1 612 131, on which the preamble of independent claim 1 is based, discloses a fender structure a motorcycle with an upper and a lower fender to provide an air-guide port for guiding a running wind to the engine in a way so that the air-guide port itself is positioned in an area where splashed up muddy water is blocked by the lower fender.

JP S58-135 386 U teaches a windshield for a motorcycle, which is surrounding the headlight and further has an air inlet to guide air towards the engine.

EP 2 390 170 A1 discloses a cowl for a headlight unit. The intent is to provide a cowl, which allows easy assembly with a reduced number of parts.

However, the conventional example with such construction has the following problems.

That is, the upper fender cannot turn with the front wheel. When the direction of the front wheel changes, the direction of the upper fender will not change. When the direction of the upper fender is different from the direction of the front wheel, the upper fender cannot appropriately block foreign substances such as pebbles and mud thrown up by the front wheel.

### SUMMARY OF THE INVENTION

This invention has been made having regard to the state of the art noted above, and its object is to provide a saddle riding type vehicle which can appropriately block foreign substances with an upper fender.

To fulfill the above object, this invention provides a saddle riding type vehicle according to claim 1.

With the saddle riding type vehicle according to the present invention, operation of the handlebar will rotate the front fork relative to the head tube. The front wheel, lower fender, upper fender and headlight unit rotate with the front fork. Therefore, the front wheel, lower fender, upper fender and headlight unit face substantially the same direction. Thus, not only the lower fender but the upper fender can block foreign substances appropriately. Therefore, the rider can be protected from the foreign substances with increased reliability.

The headlight unit can be protected conveniently from foreign substances flying from various directions. The streams of air guided to the rear part of the headlight unit can cool the headlight unit conveniently. The upper fender extends further rearward than the headlight unit, and defines a space rearward of the headlight unit. This can cool the rear part of the headlight unit effectively. Since the lower fender is relatively large, the upper fender can be reduced in size while maintaining the function of the upper fender to block foreign substances.

In the invention described above, it is preferred that the upper fender includes a flange extending further forward and downward than the headlight unit as seen from the side; and side walls for covering at least part of side surfaces of the headlight unit; as seen from the side, the side walls extending further rearward than the headlight unit.

The flange and side walls can conveniently protect the headlight unit, respectively. The side walls can further define a space adjoining the rear part of the headlight unit conveniently.

In the invention described above, it is preferred that the upper fender includes upper walls for covering at least part of an upper surface of the headlight unit; in plan view, the upper walls extending further rearward than the headlight unit. The upper walls can conveniently protect the headlight unit. The upper walls can further define the space adjoining the rear part of the headlight unit conveniently.

In the invention described above, it is preferred that a gap is formed between the upper fender and the headlight unit, and the upper fender is adapted to guide streams of air having flowed into the gap to the rearward space rearward of the rear part of the headlight unit. With the gap, the quantity of the streams of air supplied to the rear part of the headlight unit can be secured conveniently.

In the invention described above, it is preferred that the saddle riding type vehicle comprises an optical axis adjuster for adjusting a direction of an optical axis of the headlight unit, the optical axis adjuster being visible through the gap. The optical axis adjuster is operable with ease.

In the invention described above, it is preferred that the lower fender has ridge lines, and as seen from sides, lower edges of the upper fender are substantially parallel to the ridge lines of the lower fender. The streams of air can flow smoothly between the upper fender and the lower fender.

In the invention described above, it is preferred that the saddle riding type vehicle comprises flashers supported by the front fork, wherein the flashers are turnable integrally with the front wheel, the lower fender, the upper fender and the headlight unit with operation of the handlebar. The conspicuity of the flashers can be improved conveniently.

In the invention described above, it is preferred that the saddle riding type vehicle comprises a headlight stay for supporting the headlight unit, wherein the headlight stay is fixed to the front fork. This allows the headlight unit to be supported by the front fork conveniently.

In the invention described above, it is preferred that the headlight stay supports the headlight unit to be capable of adjusting a direction of an optical axis of the headlight unit. The optical axis of the headlight unit can be adjusted appropriately.

In the invention described above, it is preferred that the headlight stay further supports the upper fender. This allows the upper fender to be supported by the front fork conveniently.

In the invention described above, it is preferred that the saddle riding type vehicle comprises a fuel tank disposed rearward of the head tube; and a cover member for covering at least part of side surfaces of the fuel tank; wherein, as seen from the side, a lower edge of the upper fender and an upper edge of the cover member are substantially parallel. The lower edge of the upper fender and the upper edge of the cover member can straighten the streams of air in substantially the same direction.

In the invention described above, it is preferred that the cover member has inlet ports for introducing streams of air, the inlet ports being formed in a front part of the cover member to supply the streams of air between the cover member and the fuel tank. With the inlet ports formed in the front part of the cover member, the quantity of streams of air fed between the cover member and fuel tank can be secured easily.

In the invention described above, it is preferred that the cover member includes a first ridge line, and a second ridge line formed below the first ridge line, the lower fender includes a ridge line, and as seen from the side, the second ridge line is substantially parallel to the ridge line of the lower fender. The ridge line of the lower fender and the second ridge line of the cover member can straighten the streams of air in substantially the same direction.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.

Fig. 1 is a left side view of a saddle riding type vehicle according to an embodiment.
Fig. 2 is a front view of the saddle riding type vehicle according to the embodiment.
Fig. 3 is a plan view of the saddle riding type vehicle according to the embodiment.
Fig. 4 is a plan view of the saddle riding type vehicle when a handlebar is turned right.
Fig. 5 is a front view of the saddle riding type vehicle when the handlebar is turned right.
Fig. 6 is a side view of an upper fender.
Fig. 7 is a plan view of the upper fender.
Fig. 8 is an enlarged side view of the upper fender and a headlight unit.
Fig. 9 is an enlarged front view of the upper fender and the headlight unit.
Fig. 10 is an enlarged plan view of the upper fender and the headlight unit.
Fig. 11 is a perspective view of the upper fender and the headlight unit seen upward from a lower rearward position.
Fig. 12 is an enlarged side view of a front portion of the saddle riding type vehicle.
Fig. 13 is a sectional view taken on line V-V of Fig. 12.
Fig. 14 is a perspective view of a headlight stay.
Fig. 15 is a perspective view of a subassembly relating to the headlight unit.
Fig. 16 is a perspective view of a meter stay.
Fig. 17 is a perspective view of a subassembly relating to a meter unit.
Fig. 18 is a perspective view of the headlight stay, the meter stay and a front fork.
Fig. 19 is a chart showing an example of procedure for attaching the headlight unit and so on to the front fork.

### DESCRIPTION OF THE PREFERRED EMBODIMENTS

Preferred embodiments of this invention will be described in detail hereinafter with reference to the drawings.

### 1. Outline construction of saddle riding type vehicle

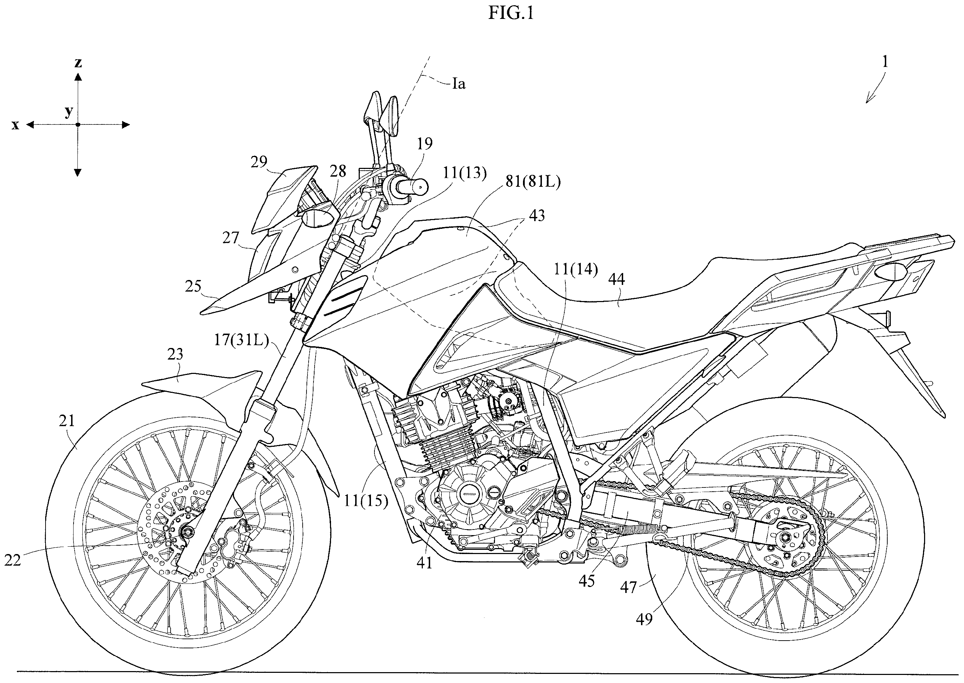

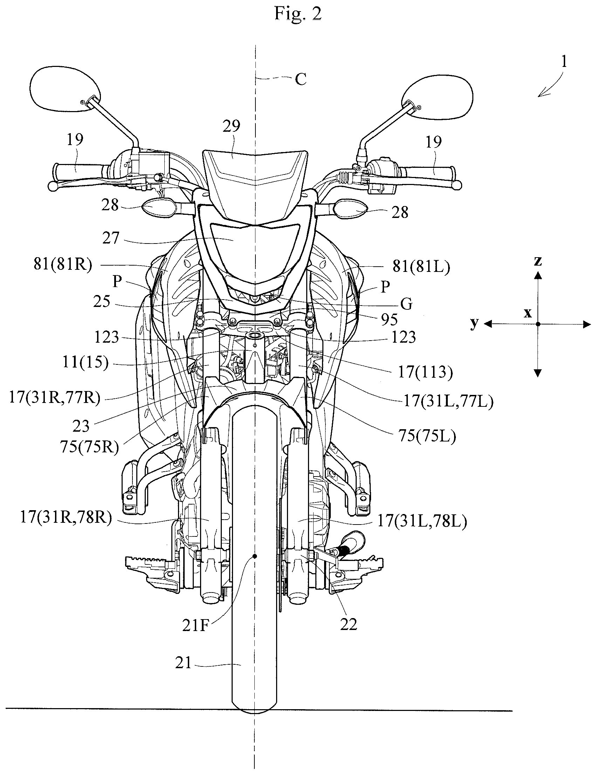

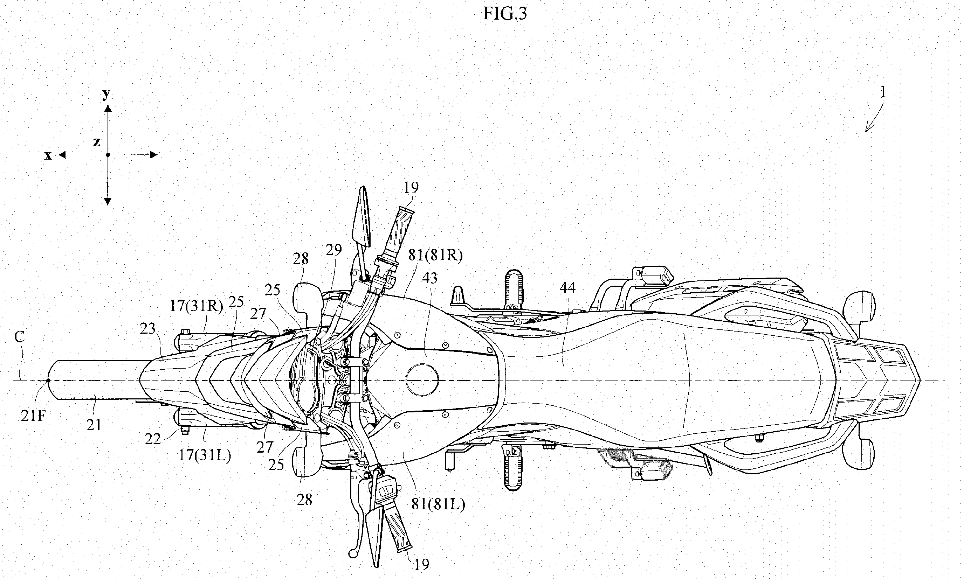

Fig. 1 is a left side view of a saddle riding type vehicle according to an embodiment. Fig. 2 is a front view of the saddle riding type vehicle according to the embodiment. Fig. 3 is a plan view of the saddle riding type vehicle according to the embodiment.

In the following description, longitudinal direction x means a longitudinal direction for the rider seated on the saddle riding type vehicle 1. Transverse direction y means a transverse direction for the rider seated on the saddle riding type vehicle 1. Vertical direction z means a vertical direction for the rider seated on the saddle riding type vehicle 1. Of the longitudinal direction, the direction in which the saddle riding type vehicle 1 advances is particularly called "forward" or "forward direction". The direction opposite to forward is called "rearward". The simple references to "right" and "left" mean "right" and "left" for the rider seated on the saddle riding type vehicle 1. As shown in Figs. 2 and 3, a plane including the center of the saddle riding type vehicle 1 is called "vehicle body center C". Of the transverse direction y, a direction for approaching the vehicle body center C is called "inward in the transverse direction". The direction opposite to "inward in the transverse direction" is called "outward in the transverse direction".

Reference is made to Fig. 1. The saddle riding type vehicle 1 has a body frame 11 and a front fork 17. The body frame 11 includes a head tube 13. The front fork 17 is rotatably supported by the head tube 13. The front fork 17 includes a right front tube 31R and a left front tube 31L. The left front fork 31L appears in Fig. 1. In the following, the right front tube 31R and left front tube 31L, when not distinguished, are called "front tubes 31".

The saddle riding type vehicle 1 has a handlebar 19 and a front wheel 21. The handlebar 19 is supported by an upper portion of the front fork 17. The front wheel 21 is supported by a lower portion of the front fork 17. Specifically, the front fork 17 supports an axle 22 for attaching the front wheel 21. The front wheel 21 is rotatable about the axle 22.

The saddle riding type vehicle 1 further includes a lower fender 23, an upper fender 25, a headlight unit 27, flashers 28 and a meter unit 29. The lower fender 23, upper fender 25, headlight unit 27, flashers 28 and meter unit 29 are supported by the front fork 17, respectively.

The lower fender 23 covers an area above the front wheel 21. The upper fender 25 is disposed above the lower fender 23. The upper fender 25 and lower fender 23 are installed with an interval in between. The lower fender 23 and upper fender 25 block foreign substances, respectively. The foreign substances are stones, gravel, mud or water mainly thrown up by the front wheel 21.

The headlight unit 27 illuminates the area ahead of the saddle riding type vehicle 1. The flashers 28 emit blinking light to indicate course changes and the like of the saddle riding type vehicle 1 to those around the saddle riding type vehicle 1. The meter unit 29 shows the rider information regarding the saddle riding type vehicle 1. The flashers 28 are installed to the right and left of the headlight unit 27. The meter unit 29 is installed on the headlight unit 27.

In Figs. 1 to 3, the front wheel 21 is directed forward. The front end 21F of the front wheel 21 is located at the vehicle body center C. At this time, the lower fender 23, upper fender 25, headlight unit 27 and flashers 28 are facing substantially the same direction (that is, forward) as the front wheel 21.

The body frame 11 further includes a main frame 14 and a down tube 15. The main frame 14 and down tube 15 are connected to the head tube 13, respectively. The main frame 14 and down tube 15 support an engine unit 41. The main frame 14 further supports a fuel tank 43. The fuel tank 43 is disposed above the engine unit 41. A seat 44 is installed rearward of the fuel tank 43. The main frame 14 supports a swing arm 45. The swing arm 45 supports a rear wheel 47. A chain 49 is wound between the engine unit 41 and the rear wheel 47.

The power generated by the engine unit 41 is transmitted to the rear wheel 47 by the chain 49, whereby the rear wheel 47 is driven to rotate. Consequently, the saddle riding type vehicle 1 moves forward.

When the rider operates the handlebar 19, the front fork 17 will turn relative to the head tube 13. The front wheel 21, lower fender 23, upper fender 25, headlight unit 27 and flashers 28 will turn with the front fork 17. The front wheel 21 will change its facing direction. The front end 21F of front wheel 21 will deviate from the vehicle body center C. The lower fender 23, upper fender 25, headlight unit 27 and flashers 28 also change the direction as does the front wheel 21, respectively. Therefore, also when the handlebar 19 is operated, the front wheel 21, lower fender 23, upper fender 25, headlight unit 27 and flashers 28 will face substantially the same direction, as when the handlebar 19 is not operated. In other words, regardless of presence or absence of operation of the handlebar 19, the relative positional relationship at least among the front wheel 21, lower fender 23, upper fender 25 and headlight unit 27 does not change. When the handlebar 19 is operated, the meter unit 29 will also turn with the front fork 17.

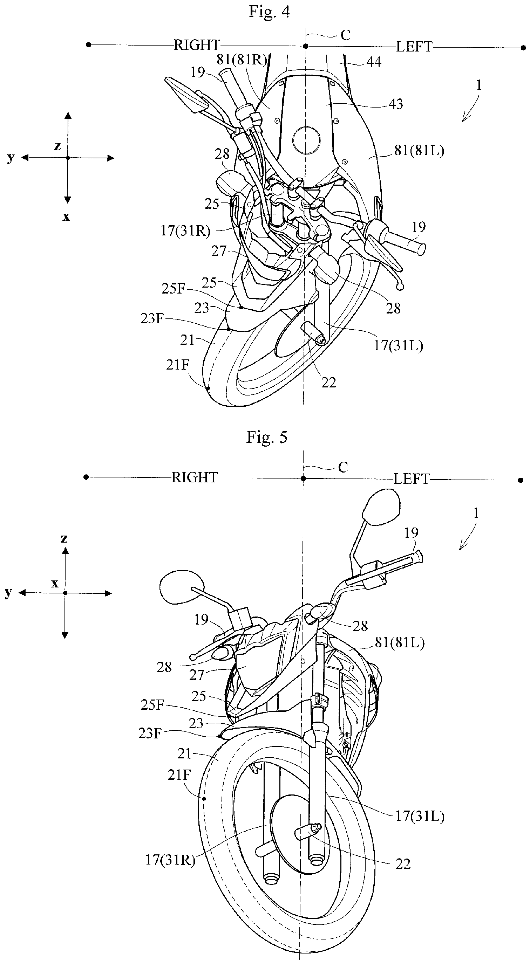

Reference is made to Figs. 4 and 5. Fig. 4 is a plan view of the saddle riding type vehicle 1 when the handlebar 19 is turned to the right. Fig. 5 is a front view of the saddle riding type vehicle 1 when the handlebar 19 is turned to the right. In Figs. 4 and 5, respectively, illustration is omitted in respect of the construction of part of the saddle riding type vehicles 1.

Even when the handlebar 19 is steered to the right as shown, the front wheel 21, lower fender 23, upper fender 25, headlight unit 27 and flashers 28 are turned to substantially the same direction. Specifically, the front wheel 21 is turned obliquely rightward and forward. The front end 21F of the front wheel 21 is located rightward of the vehicle body center C. In Figs. 4 and 5, for expediency, an area on the right side of the vehicle body center C is indicated "RIGHT", and an area on the left side of the vehicle body center C is indicated "LEFT". The front end 23F of the lower fender 23 and the front end 25F of the upper fender 25 are also located rightward of the vehicle body center C. The headlight unit 27 and flashers 28 are also turned obliquely rightward and forward.

When the handlebar 19 is turned to the left, the front wheel 21, lower fender 23, upper fender 25, headlight unit 27 and flashers 28 are turned to substantially the same direction, as when the handlebar 19 is turned to the right.

Thus, with operation of the handlebar 19, the front wheel 21, lower fender 23, upper fender 25, headlight unit 27 and flashers 28 are turned integrally relative to the head tube 13. Therefore, however the handlebar 19 is operated, the directions of the front wheel 21, lower fender 23, upper fender 25, headlight unit 27 and flashers 28 remain substantially in agreement. Therefore, the upper fender 25 always covers an area above the front wheel 21 appropriately. Therefore, not only the lower fender 23 but the upper fender 25 can reliably block foreign substances and the like.

### 2. Construction relating to upper fender 25 and headlight unit 27

The upper fender 25 will be described in detail. Reference is made to Fig. 1. As seen from a side, the upper fender 25 and headlight unit 27 are arranged forward of the head tube 13. As seen from a side, the upper fender 25 and headlight unit 27 are arranged forward of the front tube 31. More particularly, the upper fender 25 and headlight unit 27 are arranged in an area forward of a front edge of the front tube 31. For reference, Fig. 1 shows, in a chain line, an extension Ia virtually extending from the front edge of the front tube 31 in the side view.

As seen from a side, the upper fender 25 is disposed adjacent a lower portion of the headlight unit 27. As seen from a side, the upper fender 25 extends further forward and downward than the headlight unit 27. As seen from a side, the upper fender 25 extends further rearward than the headlight unit 27.

As shown in Fig. 2, the upper fender 25 surrounds the lower portion, right portion and left portion of the headlight unit 27. A gap G is formed between the upper fender 25 and the headlight unit 27. The gap G is visible from the front. As seen from the front, the gap G is visible only under the headlight unit 27. As seen from the front, the upper fender 25 is in contact with the right portion and left portion of the headlight unit 27 without gaps. Streams of air flow into the gap G at times of traveling of the saddle riding type vehicle 1.

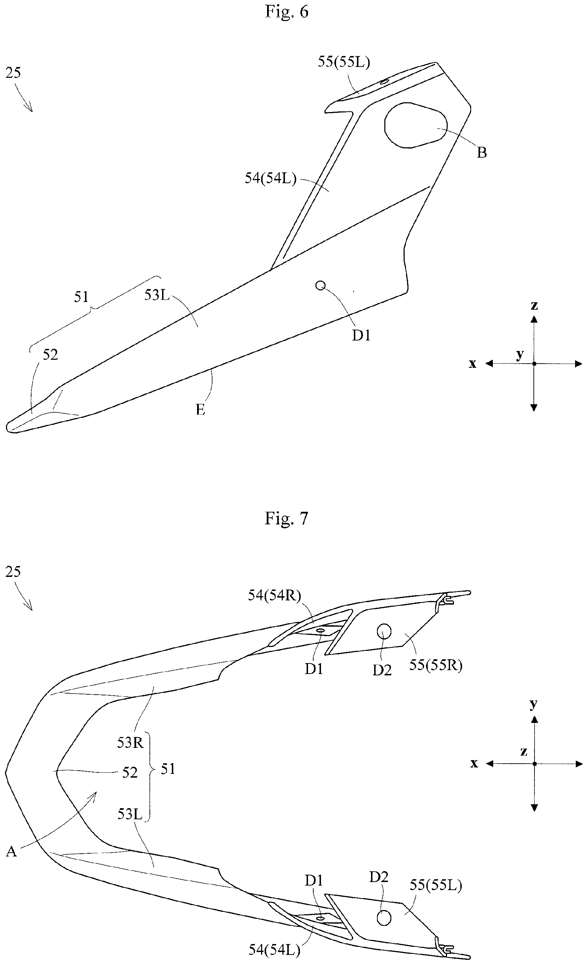

The shape of the upper fender 25 will be described. Fig. 6 is a side view of the upper fender 25. Fig. 7 is a plan view of the upper fender 25.

As seen from a side, a lower edge E of the upper fender 25 is shaped substantially linear. As seen from a side, the lower edge E is inclined to be higher as it extends rearward. More particularly, the height of the lower edge E becomes higher at a substantially constant rate from front to rear of the lower edge E.

The upper fender 25 includes a flange 51, side walls 54 and upper walls 55. As seen from a side, the flange 51 tapers toward a forward end. The flange 51 is inclined to be lower as it extends forward. The lower edge E noted above is formed on a lower portion of the flange 51.

Reference is made to Fig. 7. The flange 51 includes a front portion 52, a right leg portion 53R and a left leg portion 53L. The forward end of the front portion 52 is the front end 25F of the upper fender 25 noted hereinbefore. In plan view, the right leg portion 53R extends rearward from a right part of the front portion 52. In plan view, the left leg portion 53L extends rearward from a left part of the front portion 52. The right leg portion 53R and left leg portion 53L are separated from each other. The front portion 52, right leg portion 53R and left leg portion 53L define an opening A. The opening A is opened rearward. The opening A is visible in plan view, but is invisible in side view.

The side walls 54 include a right side wall 54R and a left side wall 54L. The right side wall 54R projects substantially upward from a rear part of the right leg portion 53R. The left side wall 54L projects substantially upward from a rear part of the left leg portion 53L. Each of the right side wall 54R and left side wall 54L has an insertion opening B and a mounting bore D1. The flashers 28 are inserted in the insertion openings B. The mounting bores D1 are used to attach the upper fender 25 to the front fork 17.

The upper walls 55 include an upper right wall 55R and an upper left wall 55L. The upper right wall 55R projects substantially inward transversely of the vehicle from an upper part of the right side wall 54R. The upper left wall 55L projects substantially inward transversely of the vehicle from an upper part of the left side wall 54L. Each of the upper right wall 55R and upper left wall 55L has a mounting bore D2. The mounting bores D2 are used to attach the upper fender 25 to the front fork 17.

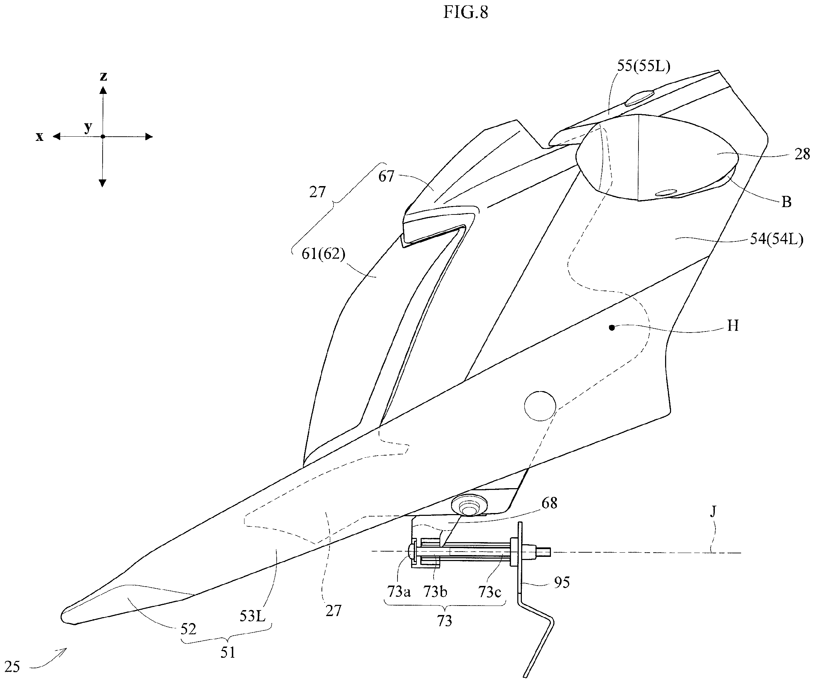

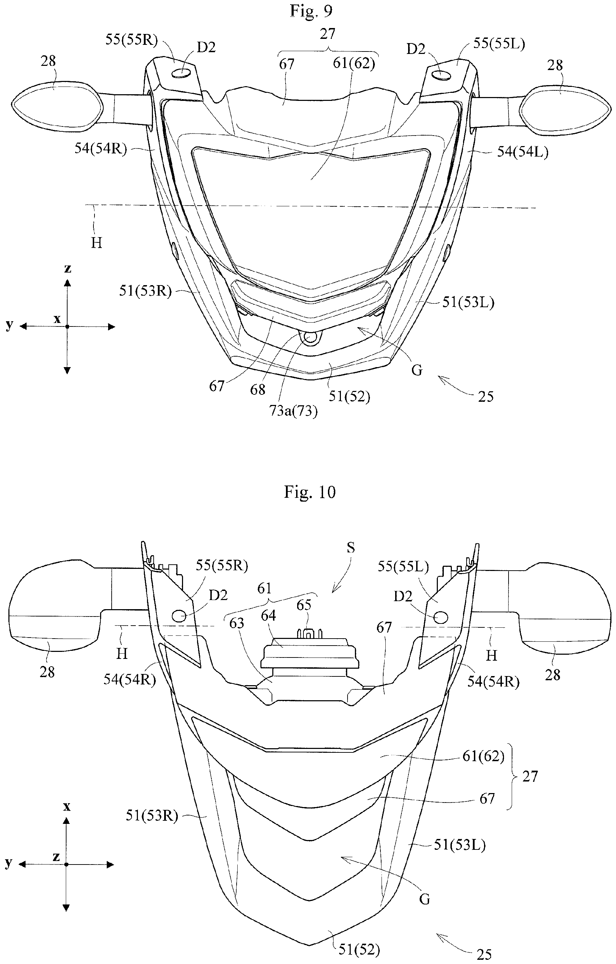

The arrangement of the upper fender 25 and headlight unit 27 will be described. Fig. 8 is an enlarged side view of the upper fender 25 and headlight unit 27. Fig. 9 is an enlarged front view of the upper fender 25 and headlight unit 27. Fig. 10 is an enlarged plan view of the upper fender 25 and headlight unit 27.

In Fig. 8, the headlight unit 27 hidden by the upper fender 25 is shown in dotted lines. As seen from a side, flange 51 extends along and adjacent a lower part of the headlight unit 27. It extends further forward and downward than the headlight unit 27 from near the lower part of the headlight unit 27. As seen from a side, the front portion 52 is located forward and downward of the headlight unit 27. As seen from a side, the left leg portion 53L overlaps the lower part of the headlight unit 27. The left leg portion 53L covers the lower part of the left side of the headlight unit 27. Similarly, the right leg portion 53R covers the lower part of the right side of the headlight unit 27. As seen from a side, part of the side of the headlight unit 27 is visible above the flange 51 (right leg portion 53R or left leg portion 53L).

As seen from a side, the side wall 54 overlaps the rear of the headlight unit 27. The side wall 54 covers the rear of the side of the headlight unit 27. Specifically, the left side wall 54L covers the rear of the left side of the headlight unit 27. The right side wall 54R covers the rear of the right side of the headlight unit 27. As seen from a side, part of the side of the headlight unit 27 is visible forward of the side wall 54.

Reference is made to Fig. 9. The lower part of the headlight unit 27 is located between the right leg portion 53R and the left leg portion 53L. As seen from the front, the front portion 52 is located below the headlight unit 27.

The gap G noted hereinbefore is visible in a position between the flange 51 and the lower part of the headlight unit 27 as seen from the front. More strictly speaking, the gap G is visible in a range surrounded by the front portion 52, right leg portion 53R, left leg portion 53L and the lower part of the headlight unit 27 as seen from the front. Since the flange 51 has the opening A, the area of the gap G visible from the front is relatively large. Since the flange 51 is inclined to be lower as it extends forward, the area of the gap G visible from the front is relatively large.

As seen from the front, the right leg portion 53R and right side wall 54R cover a right part of the headlight unit 27. As seen from the front, the left leg portion 53L and left side wall 54L cover a left part of the headlight unit 27. As seen from the front, the upper right wall 55R and upper left wall 55L cover upper parts of the headlight unit 27. More particularly, as seen from the front, the upper right wall 55R covers an upper right part of the headlight unit 27. As seen from the front, the upper left wall 55L covers an upper left part of the headlight unit 27.

Reference is made to Fig. 10. Fig. 10 shows, in dotted lines, the headlight unit 27 hidden by the upper fender 25. In plan view, the upper walls 55 overlap rear parts of the headlight unit 27. The upper walls 55 cover rear parts of an upper surface of the headlight unit 27. Specifically, the upper right wall 55R covers a right rear part of the upper surface of the headlight unit 27. The upper left wall 55L covers a left rear part of the upper surface of the headlight unit 27.

As shown in Fig. 8, the side wall 54 extends further rearward than the headlight unit 27 as seen from a side. As shown in Fig. 10, the upper walls 55 extend further rearward than the headlight unit 27 in plan view. The side walls 54 and upper walls 55 define a space S rearward of the headlight unit 27. Here, the space S adjoins the rear of the headlight unit 27. The space S will be hereinafter called "rearward space S" as appropriate. The side walls 54 function as walls which cover at least part of rightward and leftward areas of the rearward space S. The upper walls 55 function as upper walls which cover at least part of upper areas of the rearward space S.

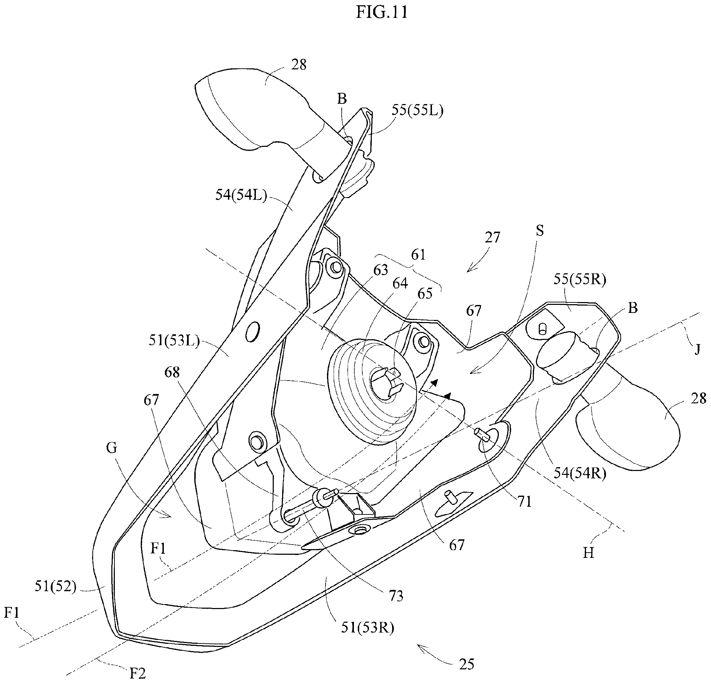

Reference is made to Fig. 11. Fig. 11 is a perspective view of the upper fender 25 and the headlight unit 27 seen upward from a lower rearward position. As shown, the rearward space S communicates with the gap G. Streams of air having flowed into the gap G flow along the bottom of the headlight unit 27 and reach the rearward space S. The streams of air having reached the rearward space S further flow along the rear of the headlight unit 27. Fig. 11 schematically shows, in a two-dot chain line, air flows F1 passing through the gap G and guided to the rear of the headlight unit 27.

The air flows guided to the rear of the headlight unit 27 are not limited to air flows passing through the gap G like the air flows F1. The upper fender 25, which is present near the lower part of the headlight unit 27, can guide part of the streams of air flowing rearward under the lower part of the flange 51 to the rear of the headlight unit 27. Particularly since the upper fender 25 extends further forward and downward than the headlight unit 27, the streams of air flowing along the lower surface of the upper fender 25 can be conveniently led to the rear of headlight unit 27. Since the lower edge E of the upper fender 25 is inclined to be higher as it extends rearward, the streams of air flowing along the lower edge E can be conveniently led to the rear of the headlight unit 27. Fig. 11 schematically shows, in a two-dot chain line, air flows F2 passing under the flange 51 and guided to the rear of the headlight unit 27.

Thus, the upper fender 25 guides the streams of air to the rear of the headlight unit 27. Consequently, the headlight unit 27 can be cooled. Further, the upper fender 25 defines the rearward space S rearward of the rear of the headlight unit 27. This increases the effect of cooling the headlight unit 27 by means of the streams of air.

The insertion openings B noted hereinbefore are arranged, as seen from a side, in a position where the side walls 54 do not overlap the headlight unit 27.

The construction of the headlight unit 27 will be described. Reference is made to Figs. 10 and 11. The headlight unit 27 includes a headlight body 61 and a headlight cover 67.

The headlight body 61 includes a lens portion 62, a housing 63, a rubber cover 64 and a terminal 65. The lens portion 62 covers the front of the housing 63. The rubber cover 64 and terminal 65 are attached to the back of the housing 63. The headlight body 61 includes a bulb not shown. The bulb is disposed inside the housing 63. The headlight cover 67 fixedly holds the housing 63.

The back of the housing 63, rubber cover 64 and terminal 65 are arranged at the rear of the headlight unit 27.

As shown in Fig. 11, pivot members 71 penetrate the headlight cover 67. The pivot members 71 rotatably support the headlight cover 67. The headlight cover 67 is rotatable about an adjustment axis H which is the axis of the pivot members 71. The adjustment axis H is substantially parallel to the transverse direction y as shown in Figs. 8 to 10. When the headlight cover 67 rotates about the adjustment axis H, the headlight unit 27 as a whole rotates relative to the upper fender 25.

Reference is made to Fig. 11. The saddle riding type vehicle 1 further includes an optical axis adjuster 73. The optical axis adjuster 73 rotates the headlight unit 27 about the adjustment axis H to adjust the direction of the optical axis of the headlight unit 27.

The headlight cover 67 has a joint 68 for joining with the optical axis adjuster 73. The joint 68 is formed at the bottom of the headlight cover 67. The joint 68 projects downward. The joint 68 is shaped to taper toward its lower end as seen from the front.

Reference is made to Fig. 8. Fig. 8 shows, in a sectional view, part of the joint 68 of the headlight cover 67. The optical axis adjuster 73 includes a rotation control element 73a, a threaded portion 73b and a stopper 73c. The rotation control element 73a has an axis of rotation J substantially parallel to the longitudinal direction x. The threaded portion 73b and stopper 73c are integrally connected to the rotation control element 73a. Rotation of the rotation control element 73a will rotate the threaded portion 73b and stopper 73c about the axis of rotation J.

The stopper 73c is rotatably supported by a support plate 95. Consequently, the threaded portion 73b does not move axially of the axis of rotation J. The threaded portion 73b is meshed with the joint 68. When the threaded portion 73b rotates, the joint 68 will move in the direction of axis J and the headlight unit 27 will rotate about the adjustment axis H.

As shown in Fig. 9, only the lower end of the joint 68 is visible through the gap G when seen from the front. The rotation control element 73a is also visible through the gap G when seen from the front.

When adjusting the optical axis of the headlight unit 27, the optical axis adjuster 73 (rotation control element 73a) can be operated through the gap G. For example, a tool for operating the optical axis adjuster 73 can be inserted into the gap G. Thus, the gap G permits operation of the optical axis adjuster 73.

### 3. Detailed construction of lower fender 23

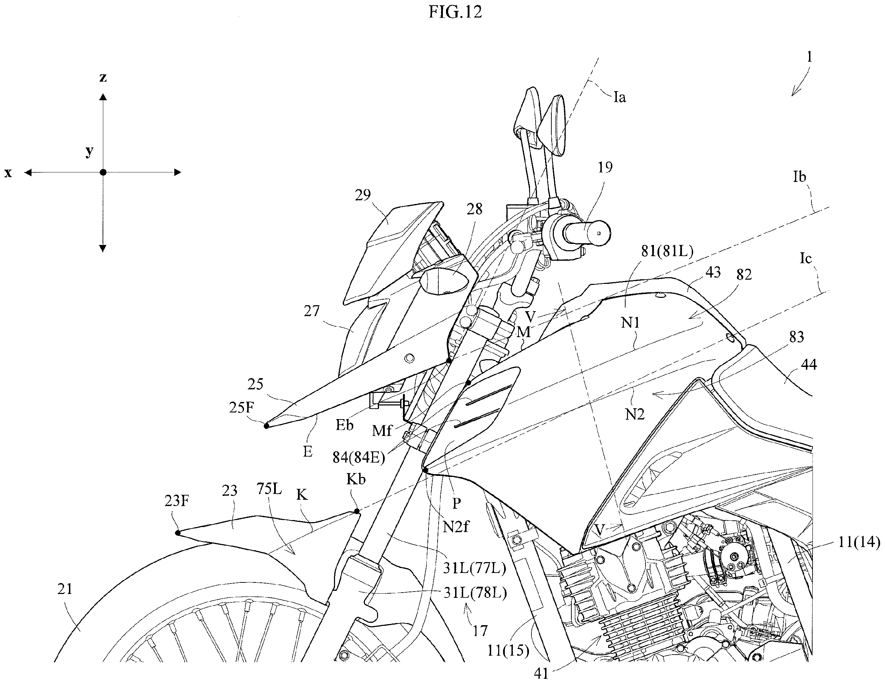

The lower fender 23 will be described in detail. Fig. 12 is an enlarged side view of a front portion of the saddle riding type vehicle 1.

As seen from a side, the lower fender 23 extends further forward than the upper fender 25. That is, the front end 25F of the upper fender 25 is located rearward of the front end 23F of the lower fender 23 as seen from a side.

The lower fender 23 has bulging portions 75 raised substantially upward. The bulging portions 75 include a right bulging portion 75R and a left bulging portion 75L (see Fig. 2). As seen from a side, the left bulging portion 75L is disposed substantially forward of the left front tube 31L. The left front tube 31L includes an inner tube 77L and an outer tube 78L. A lower part of the inner tube 77L is connected to an upper part of the outer tube 78L. As seen from a side, the left bulging portion 75L is located forward of a joint of the inner tube 77L and outer tube 78L.

The lower fender 23 is supported by an upper part of the outer tube 78L. Opposite ends of the axle 22 noted hereinbefore are supported by lower parts of the outer tubes 78R and 78L.

The right bulging portion 75R and right front tube 31R have the same constructions as the left bulging portion 75L and left front tube 31L, respectively.

As shown in Fig. 2, the lower fender 23 is arranged to straddle between the outer tubes 78R and 78L. As seen from the front, a large part of the joint of the inner tube 77R and outer tube 78R is covered by the right bulging portion 75R. A large part of the joint of the inner tube 77L and outer tube 78L is covered by the left bulging portion 75L.

In the following, the inner tube 77R and inner tube 77L, when not distinguished, will be called simply "inner tubes 77". The outer tube 78R and outer tube 78L, when not distinguished, will be called simply "outer tubes 78".

Reference is made to Fig. 12. Ridge lines K are formed on the surfaces of the bulging portions 75. The ridge lines K are bent parts of the surfaces, or boundary parts where bent surfaces intersect, of the bulging portions 75. A ridge line K is visible when seen from a side.

As seen from a side, the ridge line K has a substantially linear shape. As seen from a side, the ridge line K is inclined to be higher as it extends rearward. As seen from a side, the inclination of the ridge line K is substantially equal to the inclination of the lower edge E of the upper fender 25. That is, the ridge line K is substantially parallel to the lower edge E as seen from a side.

Here, "substantially parallel" includes not only a case where the inclination angle of the ridge line K is the same as the inclination angle of the lower edge E, but also a case where the inclination angles of the two are proximate enough to give an impression that the lower edge E and the ridge line K are parallel. The "substantially parallel" stated in the following description also has the same meaning.

As seen from a side, the lower edge E and the ridge line K are both located forward of the front tube 31 (inner tube 77). As seen from a side, the rear end Eb of the lower edge E and the rear end Kb of the ridge line K are both close to the front edge of the front tube 31. Fig. 12 shows, in a chain line, a phantom line Ia extending from the front edge of the front tube 31 in the side view for reference's sake.

### 4. Description of cover members

Reference is made to Fig. 1. The saddle riding type vehicle 1 further includes cover members 81. The cover members 81 are installed in a range from the head tube 13 (front tubes 31) to the fuel tank 43 as seen from a side. The cover members 81 cover at least part of side surfaces of the fuel tank 43. The cover members 81 include a right cover member 81R and a left cover member 81L. Fig. 1 shows, in dotted lines, the fuel tank 43 hidden by the left cover member 81L. As seen from a side, the left cover member 81L overlaps part of the fuel tank 43. Thus, the left cover member 81L covers part of the left side of the fuel tank 43. Similarly, the right cover member 81R covers part of the right side of the fuel tank 43.

Reference is made to Fig. 12. As seen from a side, the cover member 81 has an upper edge M in a substantially linear shape. As seen from a side, the upper edge M is inclined to be higher as it extends rearward. As seen from a side, the inclination of the upper edge M is substantially equal to the inclination of the lower edge E. That is, the upper edge M is substantially parallel to the lower edge E and the ridge line K as seen from a side.

As seen from a side, the front end Mf of the upper edge M is close to the front tubes 31. As seen from a side, the front end Mf of the upper edge M and the rear end Eb of the lower edge E are close together across the front tubes 31.

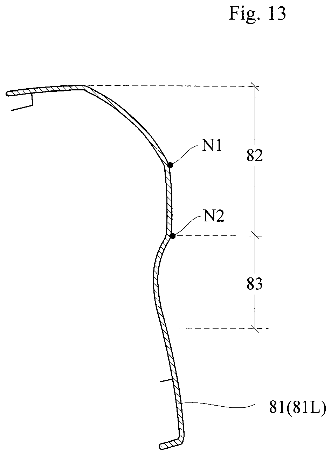

Reference is made to Fig. 13. Fig. 13 is a sectional view taken on line V-V of Fig. 12. As shown in Fig. 13, the cover member 81 has a thin shape. The cover member 81 has a bulging portion 82 and a recessed portion 83. The bulging portion 82 is curved outward in the transverse direction. The bulging portion 82 bulges outward in the transverse direction. The recessed portion 83 is formed below the bulging portion 82. The recessed portion 83 bulges inward in the transverse direction. The recessed portion 83 is curved inward in the transverse direction. The bulging portion 82 and recessed portion 83 are continuous. That is, the position of an upper end of the recessed portion 83 and the position of a lower end of the bulging portion 82 are substantially the same.

Reference is made to Fig. 12. A first ridge line N1 and a second ridgeline N2 are formed on the surface of the bulging portion 82. The first ridge line N1 and second ridge line N2 are visible when seen from a side. As seen from a side, the first ridge line N1 and second ridge line N2 are arranged in the vertical direction z. As seen from a side, the second ridge line N2 is formed below the first ridge line N1. The second ridge line N2 is located at a boundary between the bulging portion 82 and recessed portion 83.

As seen from a side, the first ridge line N1 and second ridge line N2 have a substantially linear shape, respectively. As seen from a side, the first ridge line N1 and second ridge line N2 are inclined to be higher as they extend rearward, respectively. As seen from a side, the inclination of each of the first ridge line N1 and second ridge line N2 is substantially equal to the inclination of the lower edge E. That is, the first ridge line N1 and second ridge line N2 are substantially parallel to the lower edge E, ridge line K and upper edge M as seen from a side.

As seen from a side, the front end N2f of the second ridge line N2 is close to the front tube 31. As seen from a side, the front end N2f of the second ridge line N2 is close to the rear end Kb of the ridge line K across the front tube 31. Particularly, the second ridge line N2 is located substantially on an extension Ic of the ridge line K as seen from a side.

The cover members 81 further include inlet ports P for introducing the streams of air. The inlet ports P communicate with spaces between the cover members 81 and fuel tank 43. The streams of air having flowed into the inlet ports P are fed between the cover members 81 and fuel tank 43.

The inlet ports P are arranged in front parts of the cover members 81. The inlet ports P range from front surfaces to side surfaces of the cover members 81. Therefore, the inlet ports P are visible not only when seen from the front but also when seen from sides. The inlet ports P are arranged in the bulging portions 82. As seen from a side, the inlet port P is disposed between the upper edge M and the second ridge line N2. Therefore, as shown in Fig. 2, the area of the inlet ports P can be made relatively large as seen from the front. As seen from a side, the inlet port P is disposed between an extension Ib of the lower edge E and the extension Ic of the ridge line K. To describe this more particularly, as seen from a side, the inlet port P is disposed in a region below the extension Ib and above the extension Ic.

The cover members 81 have one or more flow straighteners 84. The flow straighteners 84 are arranged in the inlet ports P. The flow straighteners 84 are plate-shaped. As seen from a side, edges 84E of the flow straighteners 84 are visible. As seen from a side, the edges 84E are substantially parallel to the upper edge M, first ridge line N1 and second ridge line N2.

### 5. Structure for mounting upper fender 25 and other components

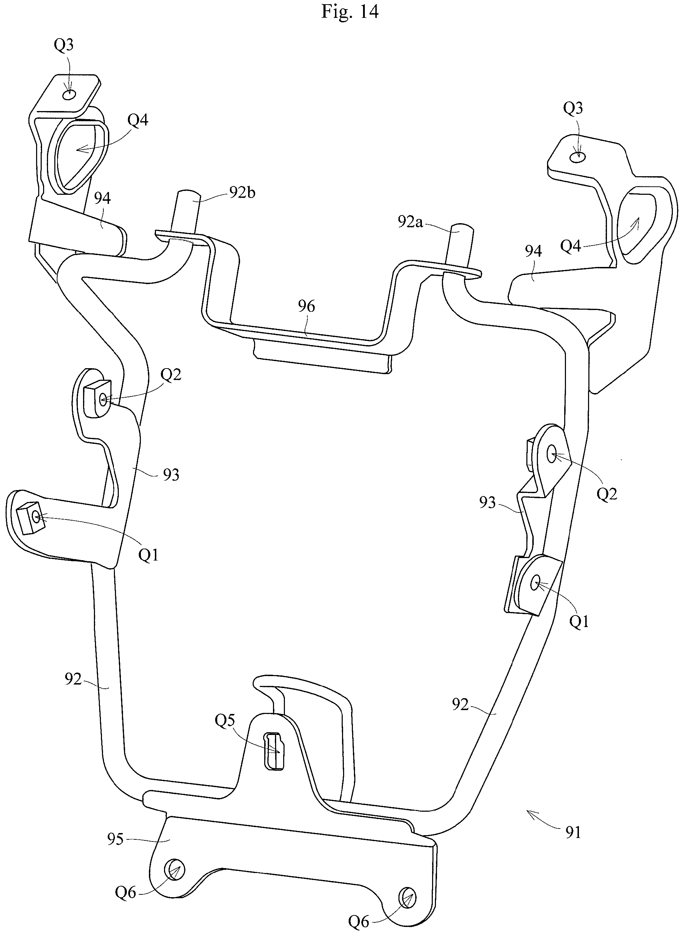

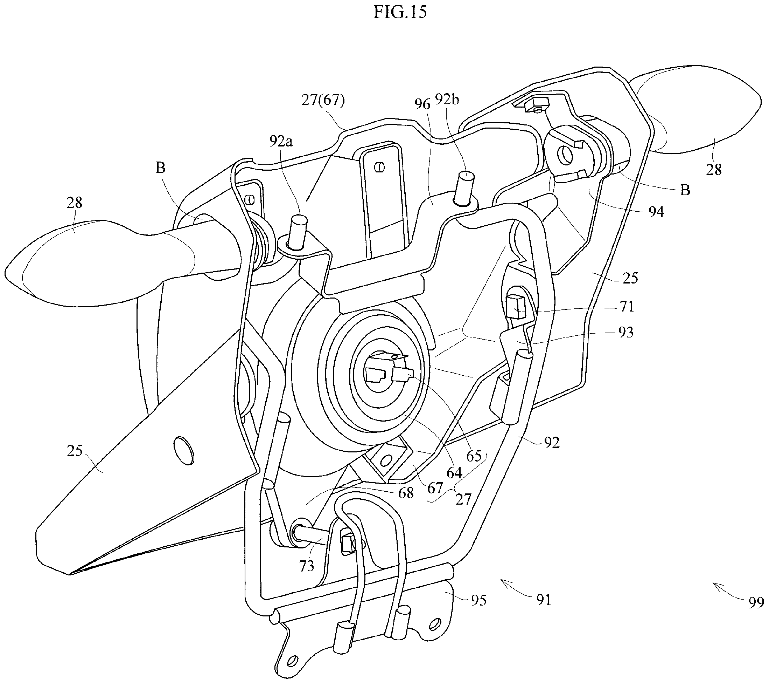

A structure for mounting the upper fender 25 and other components will be described. Fig. 14 is a perspective view of a headlight stay. Fig. 15 is a perspective view of a subassembly relating to the headlight unit.

The saddle riding type vehicle 1 has a headlight stay 91. The headlight stay 91 supports the headlight unit 27 and other components. The headlight stay 91 includes a frame 92, lower mounting pieces 93, upper mounting pieces 94, a support plate 95 and a bar 96. The frame 92 is formed of a steel material with a substantially circular section. The frame 92 has a predetermined shape including a plurality of bends. The lower mounting pieces 93, upper mounting pieces 94 and support plate 95 are fixed to the frame 92.

The lower mounting pieces 93 have mounting bores Q1 and Q2. The mounting bores Q1 are used to fix the upper fender 25 to the headlight stay 91. The mounting bores Q2 are used to fix the pivot members 71 to the headlight stay 91.

The upper mounting pieces 94 have mounting bores Q3 and Q4. The mounting bores Q3 are used to fix the upper fender 25 to the headlight stay 91. The mounting bores Q4 are used to fix the flashers 28 to the headlight stay 91.

The support plate 95 has mounting bores Q5 and Q6. The mounting bore Q5 is used to support the optical axis adjuster 73. The mounting bores Q6 are used to fix the headlight stay 91 to the front fork 17.

Ends 92a and 92b of the frame 92 project upward, respectively. The end 92a and the end 92b are interconnected by the bar 96. The ends 92a and 92b function as pin members.

Reference is made to Fig. 15. The headlight unit 27 is attached to the headlight stay 91 through the pivot members 71. The headlight stay 91 and headlight unit 27 are connected through the optical axis adjuster 73. The headlight unit 27 is rotatable relative to the headlight stay 91. The upper fender 25 and flashers 28 are fixed to the headlight stay 91. The mounting bores Q1 are aligned to the mounting bores D1 of the upper fender 25. The mounting bores Q3 are aligned to the mounting bores D2 of the upper fender 25. The mounting bores Q4 are aligned to the insertion openings B of the upper fender 25.

In this specification, the headlight stay 91 with the upper fender 25, headlight unit 27 and flashers 28 attached thereto is called "subassembly 99".

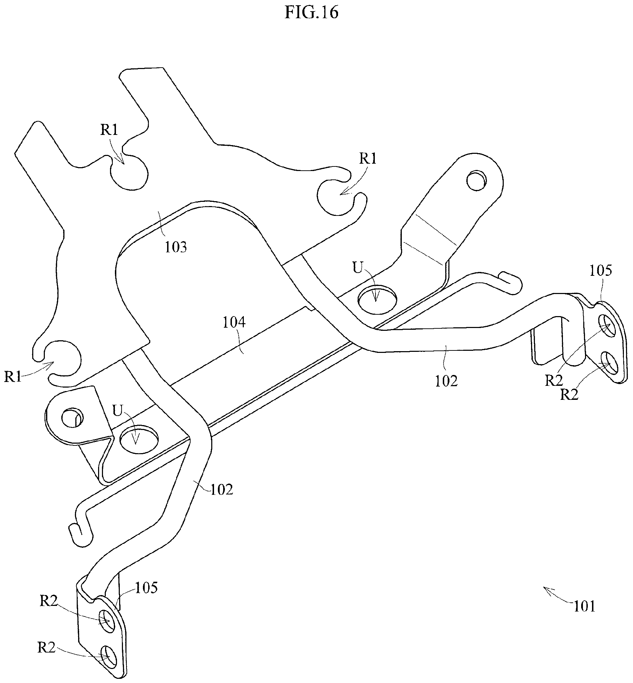

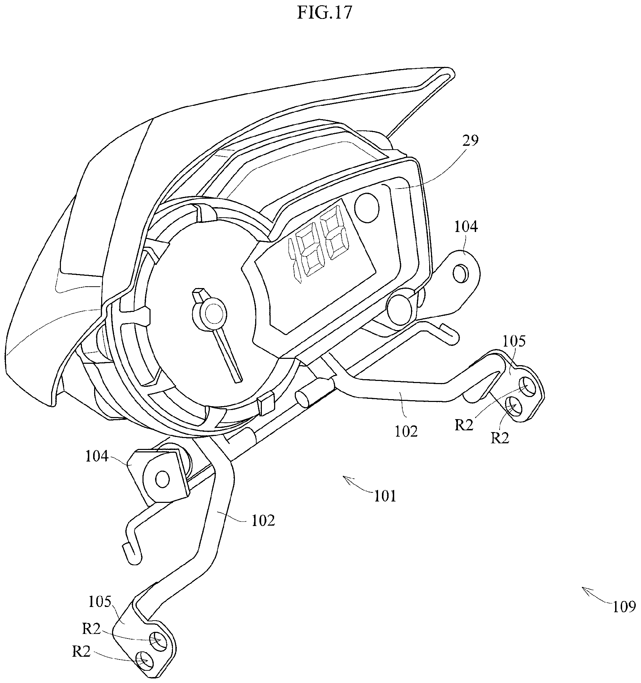

A structure for mounting the meter unit 29 will be described next. Fig. 16 is a perspective view of a meter stay. Fig. 17 is a perspective view of a subassembly relating to the meter unit 29.

The saddle riding type vehicle 1 has a meter stay 101. The meter stay 101 supports the meter unit 29. The meter stay 101 includes a frame 102, a mounting piece 103, a bar 104 and support plates 105. The mounting piece 103, bar 104 and support plates 105 are fixed to the frame 102.

The mounting piece 103 has mounting bores R1. The mounting bores R1 are used to fix the meter unit 29 to meter stay 101. The bar 104 has insertion bores U. The insertion bores U receive the ends 92a and 92b of the frame 92 of the headlight stay 91. The support plates 105 have mounting bores R2. The mounting bores R2 are used to fix the meter stay 101 to the front fork 17.

Reference is made to Fig. 17. As shown, the meter unit 29 is attached to the meter stay 101.

In this specification, the meter stay 101 with the meter unit 25 attached thereto is called "subassembly 109".

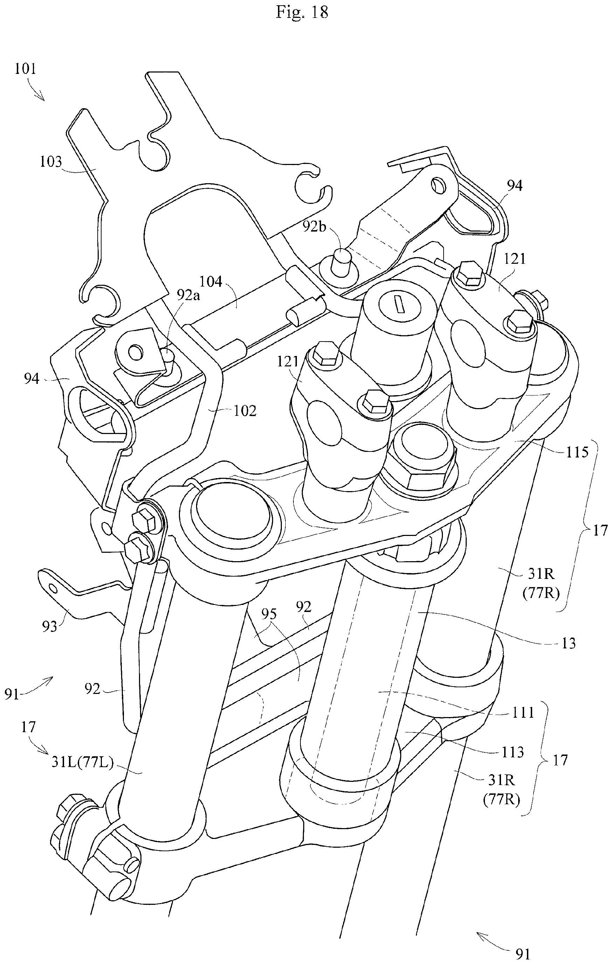

Fig. 18 is a perspective view of the headlight stay 91, meter stay 101 and front fork 17.

The front fork 17 further includes a steering shaft 111, an under bracket 113 and an upper bracket 115. The steering shaft 111 is inserted in the head tube 13. The steering shaft 111 is rotatably supported by the head tube 13. Fig. 18 shows the steering shaft 111 in chain lines. The under bracket 113 is connected to a lower part of the steering shaft 111. The upper bracket 115 is connected to an upper part of the steering shaft 111. The under bracket 113 and upper bracket 115 support the pair of front tubes 31 (inner tubes 77).

The headlight stay 91 is attached to the under bracket 113. Specifically, as shown in Fig. 2, the support plate 95 is fixed to the under bracket 113 by fastening members 123. The fastening members 123 are inserted in the mounting bores Q6 of the support plate 95. Through this headlight stay 91, the upper fender 25, headlight unit 27 and flashers 28 are indirectly supported by the front fork 17.

The meter stay 101 is fixed to the upper bracket 115 using the mounting bores R2. That is, the headlight stay 91 is installed below the meter stay 101. The ends 92a and 92b of the frame 92 are inserted in the insertion bores U of the bar 104, respectively. Consequently, position shifting of the headlight stay 91 and meter stay 101 is inhibited.

Handlebar holders 121 are attached to the upper bracket 115. The handlebar holders 121 hold the handlebar 19. The handlebar 19 is indirectly supported by the front fork 17.

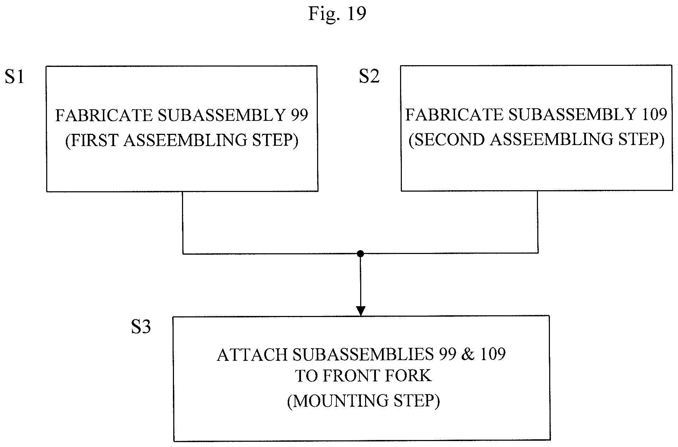

Next, a procedure for attaching the headlight unit 27, meter unit 29 and so on to the front fork 17 will be described by way of example. Reference is made to Fig. 19. Fig. 19 is a chart showing an example of procedure for attaching the headlight unit 27 and so on to the front fork 17.

### <Step S1> Fabricate subassembly 99 (first assembling step)

The headlight unit 27, upper fender 25 and flashers 28 are attached to the headlight stay 91. Consequently, the subassembly 99 relating to the headlight unit 27 is obtained.

### <Step S2> Fabricate subassembly 109 (second assembling step)

The meter unit 29 is attached to the meter stay 91. Consequently, the subassembly 109 relating to the meter unit 29 is obtained.

### <Step S3> Attach subassemblies 99 and 109 to the front fork (mounting step)

The subassembly 99 and subassembly 109 are attached to the front fork 17.

Next, procedures for detaching and attaching the headlight unit 27 after attaching the assemblies 99 and 109 to the front fork 17 will be described by way of example.

When detaching the headlight unit 27 from the front fork 17, the fastening members 123 (see Fig. 2) are removed, and the ends 92a and 92b of the frame 92 are extracted from the insertion bores U of the bar 104. The subassembly 99 is detached from the front fork 17. Consequently, the headlight unit 27 can be separated from the front fork 17 without detaching the meter unit 29 and subassembly 109 from the front fork 17.

When attaching the headlight unit 27 to the front fork 17, the subassembly 99 is fabricated. The ends 92a and 92b of the frame 92 are inserted in the insertion bores U of the bar 104. The headlight stay 91 is fixed to the under bracket 113. Consequently, the headlight unit 27 can be attached to the front fork 17 while the meter unit 29 and subassembly 109 remain attached to the front fork 17.

This is also the same as when detaching and attaching the meter unit 29 after attaching the subassemblies 99 and 109 to the front fork 17. That is, without detaching the headlight unit 27 and so on from the front fork 17, the meter unit 29 can be detached from the front fork 17, and the meter unit 29 can be attached to the front fork 17.

Thus, according to the saddle riding type vehicle 1 in this embodiment, the front wheel 21, lower fender 23 and upper fender 25 are supported by the front fork 17. And however the handlebar 19 may be operated, the front wheel 21, lower fender 23 and upper fender 25 face substantially the same direction. The lower fender 23 and upper fender 25 can therefore properly block off foreign substances, respectively. Therefore, foreign substances can be prevented from hitting the rider with increased reliability. Foreign substances can also be prevented from colliding with the headlight unit 27 and so on with increased reliability.

Further, when the saddle riding type vehicle 1 travels straight and when it makes turns, the upper fender 25 faces substantially the same direction as the direction of movement of the saddle riding type vehicle 1. Therefore, air resistance acting on the upper fender 25 at traveling times can be reduced.

The headlight unit 27 is supported by the front fork 17. And however the handlebar 19 may be operated, the headlight unit 27 faces substantially the same direction as the front wheel 21, lower fender 23 and upper fender 25. Therefore, the lower fender 23 and upper fender 25 can protect the headlight unit 27 (especially the lens unit 62) with increased accuracy.

Further, when the saddle riding type vehicle 1 travels straight and when it makes turns, the headlight unit 27 faces substantially the same direction as the direction of movement. Therefore, the headlight unit 27 conveniently illuminates the traveling surface or the like in the direction of movement of the saddle riding type vehicle 1. The rider can appropriately recognize the traveling surface or the like in the direction of movement. People around the saddle riding type vehicle 1 can appropriately recognize the headlight unit 27. That is, the headlight unit 27 has high visibility and conspicuity.

As seen from a side, the upper fender 25 is present near the lower part of the headlight unit 27. Therefore, the upper fender 25 can protect the headlight unit 27 from foreign substances with increased accuracy.

As seen from a side, the upper fender 25 (flange 51) forward and downward of the headlight unit 27. Therefore, the upper fender 25 can protect the headlight unit 27 with increased accuracy.

As seen from a side, the upper fender 25 (side walls 54 and upper walls 55) extends rearward of the headlight unit 27. Therefore, the upper fender 25 can protect the headlight unit 27 with increased accuracy.

As seen from a side, the upper fender 25 overlaps at least part of the headlight unit 27. Therefore, it can protect the headlight unit 27 with increased accuracy.

The upper fender 25 (right leg portion 53R and left leg portion 53L) covers lower parts of the opposite sides of the headlight unit 27. Therefore, it can protect the headlight unit 27 with increased accuracy.

The upper fender 25 (side walls 54) covers rear parts of the opposite sides of the headlight unit 27. Therefore, it can protect the headlight unit 27 with increased accuracy.

The upper fender 25 overlaps at least part of the headlight unit 27 in plan view. Therefore, it can protect the headlight unit 27 with increased accuracy.

The upper fender 25 (upper walls 55) covers at least part of the upper surface of the headlight unit 27. Therefore, it can protect the headlight unit 27 with increased accuracy.

As seen from the front, the upper fender 25 (flange 51 and side walls 54) surrounds a lower part, a right part and a left part of the headlight unit 27. Therefore, it can protect the headlight unit 27 with increased accuracy.

Since the upper fender 25 guides streams of air to the rear of the headlight unit 27, the rear of the headlight unit 27 can be cooled conveniently. Particularly the rear (the back of housing 63 and the terminal 65) of the headlight unit 27 is easily heated to a relatively high temperature. Therefore, the headlight unit 27 can be cooled effectively by guiding the streams of air to the rear of the headlight unit 27.

The upper fender 25 extends rearward of the headlight unit 27 and defines the rearward space S. Specifically, the side walls 54 cover at least part of rightward and leftward areas of the rearward space S. The upper walls 55 cover at least part of upper areas of the rearward space S. Consequently, the rear of the headlight unit 27 can be cooled with increased effect.

Particularly, as seen from a side, the upper fender 25 (flange 51) extends forward and downward of the headlight unit 27. The lower edge E of the upper fender 25 is, as seen from a side, inclined to be higher as it extends rearward. Therefore, the streams of air can be guided smoothly to the rear of the headlight unit 27.

A gap G is formed between the upper fender 25 (flange 51) and the headlight unit 27. Therefore, the quantity of the streams of air supplied to the rear of the headlight unit 27 can be secured conveniently.

The gap G communicates with the rearward space S. Therefore, the streams of air having passed through the gap G can be guided to the rear of headlight unit 27 still more smoothly.

Since the gap G is visible when seen from the front, the streams of air can easily flow into the gap G. When the saddle riding type vehicle 1 travels straight and when it makes turns, the upper fender 25 faces substantially the same direction as the direction of movement. Therefore, the streams of air can always easily flow into the gap G.

The gap G is formed below the headlight unit 27. Therefore, the bottom of the headlight unit 27 can also be cooled conveniently by the streams of air flowing into the gap G.

The flange 51 is inclined to be lower as it extends forward, and the front portion 52 is located below the headlight unit 27 as seen from the front. Therefore, the gap G can be formed conveniently below the headlight unit 27. The gap G can be formed relatively large as seen from the front. Therefore, the quantity of streams of air flowing into the gap G can be secured conveniently.

Since the flange 51 has the opening A, the gap G is relatively large. Therefore, the quantity of streams of air flowing into the gap G can be secured conveniently.

Since the opening A is opened rearward, the streams of air can flow smoothly from the gap G to the rear of the headlight unit 27.

The optical axis adjuster 73 (rotation control element 73a) is visible through the gap G when seen from the front. Therefore, the optical axis of the headlight unit 27 can be adjusted easily. Especially since the gap G visible from the front is relatively large, the optical axis adjuster 73 can be operated with increased ease.

The axis of rotation J of the rotation control element 73a is substantially parallel to the longitudinal direction x. Therefore, the rotation control element 73a can be operated through the gap G with increased ease.

As seen from the front, only the lower end of the joint 68 can be seen through the gap G. That is, the joint 68 has a relatively small area which blocks the flow of the streams of air. Therefore, the joint 68 is inhibited from disturbing the flow of the streams of air.

The headlight unit 27 is rotatable about the adjustment axis H relative to the upper fender 25. Therefore, the optical axis of the headlight unit 27 can be adjusted without changing the position and posture of the upper fender 25. The upper fender 25 can always be installed in an appropriate position and in an appropriate posture.

As seen from a side, the flange 51 tapers toward the forward end. Therefore, the air resistance to which the upper fender 25 is subjected can further reduced.

As seen from a side, part of the side surface of the headlight unit 27 is visible above the flange 51 and forward of the side wall 54. Therefore, the conspicuity of the headlight unit 27 can be further improved.

As seen from a side, the lower fender 23 extends forward of the upper fender 25. The lower fender 23 can block foreign substances over a relatively large range. Therefore, the upper fender 25 can be reduced in size while maintaining the function of the upper fender 25 to block foreign substances. This can reduce the air resistance to which the upper fender 25 is subjected.

The flashers 28 are supported by the front fork 17. And however the handlebar 19 may be operated, the flashers 28 face substantially the same direction as the front wheel 21. Therefore, when the saddle riding type vehicle 1 travels straight and when it makes turns, the flashers 28 face substantially the same direction as the direction of movement. Therefore, the conspicuity of the flashers 28 can be secured appropriately.

As seen from a side, the ridge line K of the lower fender 23, the lower edge E of the upper fender 25, and the upper edge M, first ridge line N1 and second ridge line N2 of the cover member 81 are substantially parallel to one another. Therefore, streams of air can flow smoothly through areas on the right and left sides of the saddle riding type vehicle 1. The flows of the streams of air can be straightened in substantially the same direction. Consequently, the air resistance to which the saddle riding type vehicle 1 is subjected can be reduced conveniently. The outward appearance of the saddle riding type vehicle 1 gives an impression with a feeling of uniformity.

In particular, as seen from a side, the lower edge E and ridge line K are both arranged vertically and forward of the front tube 31. Therefore, the streams of air flow smoothly between the upper fender 25 and lower fender 23.

As seen from a side, the rear end Eb of the lower edge E and the rear end Kb of the ridge line K are close to the front tube 31, respectively. Therefore, straightened streams of air can be fed rearward of the front tube 31. Consequently, the air resistance to which the saddle riding type vehicle 1 is subjected can be further reduced.

As seen from a side, the rear end Eb of the lower edge E and the front end Mf of the upper edge M are close to each other. Therefore, the lower edge E and upper edge M can continuously guide the streams of air. This allows the streams of air to flow smoothly through a long range from the upper fender 25 to the cover members 81.

Similarly, as seen from a side, the rear end Kb of the ridge line K and the front end N2f of the second ridge line N2 are close to each other. Therefore, the ridge line K and second ridge line N2 can continuously guide the streams of air. This allows the streams of air to flow smoothly through a long range from the lower fender 23 to the cover members 81.

Since the cover members 81 have inlet ports P, the quantity of streams of air fed between the cover members 81 and fuel tank 43 can be secured conveniently. This can cool the engine unit 41 (eg cylinder head), exhaust pipe and so on.

Since the inlet ports P are formed in the front parts of the cover members 81, the quantity of streams of air flowing into the inlet ports P can be secured conveniently. Since the inlet ports P are arranged in the bulging portions 82, the inlet ports P are relatively large. Therefore, the quantity of streams of air flowing into the inlet ports P can be secured more conveniently.

The inlet ports P are arranged between the extension Ib of the lower edge E and the extension Ic of the ridge line K. Therefore, the streams of air straightened by the lower edge E and ridge line K can flow into the inlet ports P.

As seen from a side, the edges 84E of the flow straighteners 84 are substantially parallel to the lower edge E, ridge line K, upper edge M, first ridge line N1 and second ridge line N2. Therefore, the flow straighteners 84 can smoothly straighten, without disturbing, the streams of air flowing into the inlet ports P.

The saddle riding type vehicle 1 has the headlight stay 91. Therefore, the upper fender 25, headlight unit 27 and flashers 28 can be attached to the front fork 17 conveniently.

The headlight stay 91 supports the headlight unit 27 in a way to render the direction of the optical axis of the headlight unit 27 adjustable. The optical axis of the headlight unit 27 can therefore be adjusted conveniently. The headlight stay 91 fixedly supports the upper fender 25. Therefore, the optical axis of the headlight unit 27 can be adjusted without changing the position of the upper fender 25.

Thus, the headlight stay 91 having the headlight unit 27 attached thereto and the meter stay 101 having the meter unit 29 attached thereto are discrete members. Therefore, the subassembly 99 relating to the headlight unit 27 and the subassembly 109 relating to the meter unit 29 can be assembled individually.

For example, the first assembling step (step S1) and the second assembling step (step S2) can be executed at different production lines or different factories. Or the first and second assembling steps can be executed at different times. Therefore, each of the subassemblies 99 and 109 can be produced efficiently.

In this case, the mounting step (step S3) consists only in an operation for attaching two completed subassemblies 99 and 109 to the front fork 17. This can effectively reduce man-hours for the mounting step. The production line for executing the mounting step can also be effectively reduced.

Since the stays 91 and 101 are discrete members, only one of the subassemblies 99 and 109 can be detached from the front fork 17 or can be attached to the front fork 17. Consequently, the headlight unit 27, meter unit 29 and so on can be repaired or checked easily. For example, the bulb of the headlight unit 27 can be changed easily. For example, also, the meter unit 29 can be maintained easily.

Further, since the stays 91 and 101 are discrete members, the stays 91 and 101 can be attached to different parts of the front fork 17, respectively. This can increase the degree of freedom in arranging the headlight unit 27 and meter unit 29. This can also avoid a situation where the headlight unit 27 and meter unit 29 are concentrated in one place (eg around the upper bracket 115). Consequently, enlargement of the upper bracket 115, for example, can be inhibited.

This invention is not limited to the foregoing embodiment, but may be modified as follows:
(1) In the foregoing embodiment, the upper fender 25 (flange 51) has the opening A, but this is not limitative. That is, a change may be made to an upper fender without opening A.
(2) In the foregoing embodiment, the cover members 81 have inlet ports P, but this is not limitative. That is, the inlet ports P may be omitted from the cover members 81. In that case, the cover members 81 may have, formed therein, recesses of an outward configuration similar to the inlet ports P.
(3) In the foregoing embodiment, the members supported by the headlight stay 91 include the upper fender 25 and flashers 28 besides the headlight unit 27, but this is not limitative. For example, the headlight stay 91 may further support other members. The headlight stay 91 does not need to support at least either of the upper fender 25 and flashers 28. Similarly, the member supported by the meter stay 101 is the meter unit 29, but this is not limitative. For example, the meter stay 101 may further support other members.
(4) In the foregoing embodiment, the flashers 28 rotate with the front fork 17, but the flashers 28 do not need to rotate with the front fork 17. In the foregoing embodiment, the flashers 28 are supported by the front fork 17, but this is not limitative. For example, the flashers 28 may be supported by the body frame 11.
(5) In the foregoing embodiment, the upper fender 25, headlight unit 27 and flashers 28 are indirectly supported by the front fork 17, but this is not limitative. At least one or more of the upper fender 25, headlight unit 27 and flashers 28 may be supported directly by the front fork 17.
(6) In the foregoing embodiment, the ridge lines K are formed on the surfaces of the bulging portions 75 of the lower fender 23, but this is not limitative. The ridge lines K may be formed on surfaces of the lower fender 23 other than the bulging portions 75.
(7) In the foregoing embodiment, the ridge lines N1 and N2 are formed in the bulging portion 82 of the cover member 81, but this is not limitative. At least one of the ridge lines N1 and N2 may be formed on a surface of the cover member 81 other than the bulging portion 82. Or at least one of the ridge lines N1 and N2 may be omitted.
(8) In the foregoing embodiment, the headlight stay 91 is fixed to the under bracket 113, but this is not limitative. For example, the headlight stay 91 to a different part of the front fork 17. Similarly, the position of the front fork 17 where the meter stay 101 is fixed may be changed as appropriate.
(9) In the foregoing embodiment, the headlight unit 27 and flashers 28 are discrete members, but this is not limitative. For example, a change may be made to a light unit including both the flashers and the headlight.
(10) In the foregoing embodiment, the saddle riding type vehicle 1 is a motorcycle with the single front wheel 21 and the single rear wheel 47, but this is not limitative. For example, a change may be made to a three-wheeled vehicle with two front wheels, or a three-wheeled vehicle with two rear wheels. Or a change may be made to a four-wheeled vehicle with two front wheels and two rear wheels. In such modified embodiments, the construction of front fork 17 can be selected or changed as appropriate.
(11) In the foregoing embodiment, the saddle riding type vehicle 1 has the engine unit 41 as the source of power, but this is not limitative. For example, the source of power may be changed to include an electric motor.
(12) A further change may be made in each of the embodiment and the modified embodiments described in sections (1) to (11) above, as appropriate, by replacing each construction with another modification or combining the described constructions.

## Claims

1. A saddle riding type vehicle comprising:
a head tube (13);
a front fork (17) rotatably supported by the head tube (13);
a handlebar (19) supported by an upper part of the front fork (17);
a front wheel (21) supported by a lower part of the front fork (17);
a lower fender (23) supported by the front fork (17) for covering an area above the front wheel (21);
an upper fender (25) supported by the front fork (17) and disposed above the lower fender (23); and
a headlight unit (27) supported by the front fork (17);
wherein the front wheel (21), the lower fender (23), the upper fender (25) and the headlight unit (27) are integrally turnable with operation of the handlebar (19);
the headlight unit (27) and the upper fender (25) are separate components;
as seen from a side, the upper fender (25) extends further forward and downward than the headlight unit (27);
as seen from the side, the upper fender (25) extends further rearward than the headlight unit (27); and as seen from a front, the upper fender (25) surrounds a lower part,
a right part and a left part of the headlight unit (27); **characterized in that** the upper fender (25) defines a rearward space (S) rearward of the rear part of the headlight unit (27), the rearward space (S) adjoining the rear part of the headlight unit (27), and the upper fender (25) is adapted to guide streams of air to said rearward space (S) rearward of the rear part of the headlight unit (27); and
a front end (25F) of the upper fender (25) is located further rearward than a front end (23F) of the lower fender (23).

2. The saddle riding type vehicle according to claim 1, wherein the upper fender (25) includes:
a flange (51) extending further forward and downward than the headlight unit (27) as seen from the side; and
side walls (54) for covering at least part of side surfaces of the headlight unit (27);
as seen from the side, the side walls (54) extending further rearward than the headlight unit (27).

3. The saddle riding type vehicle according to claim 2, wherein, as seen from the side, the flange (51) tapers toward the forward end (25F).

4. The saddle riding type vehicle according to claim 2 or 3, wherein:
the upper fender (25) includes upper walls (55) for covering at least part of an upper surface of the headlight unit (27);
in plan view, the upper walls (55) extending further rearward than the headlight unit (27).

5. The saddle riding type vehicle according to any one of claims 1 to 4, wherein:
a gap (G) is formed between the upper fender (25) and the headlight unit (27); and
the upper fender (25) is adapted to guide streams of air having flowed into the gap (G) to said rearward space (S) rearward of the rear part of the headlight unit (27).

6. The saddle riding type vehicle according to claim 5, comprising an optical axis adjuster (73) for adjusting a direction of an optical axis of the headlight unit (27);
the optical axis adjuster (73) being visible through the gap (G).

7. The saddle riding type vehicle according to any one of claims 1 to 6, wherein:
the lower fender (23) has ridge lines (K); and
as seen from sides, lower edges (E) of the upper fender (25) are substantially parallel to the ridge lines (K) of the lower fender (23).

8. The saddle riding type vehicle according to any one of claims 1 to 7, comprising flashers (28) supported by the front fork (17);
wherein the flashers (28) are turnable integrally with the front wheel (21), the lower fender (23), the upper fender (25) and the headlight unit (27) with operation of the handlebar (19).

9. The saddle riding type vehicle according to any one of claims 1 to 8, comprising a headlight stay (91) for supporting the headlight unit (27);
wherein the headlight stay (91) is fixed to the front fork (17).

10. The saddle riding type vehicle according to claim 9, wherein the headlight stay (91) supports the headlight unit (27) to be capable of adjusting a direction of an optical axis of
the headlight unit (27).

11. The saddle riding type vehicle according to claim 9 or 10, wherein the headlight stay (91) further supports the upper fender (25).

12. The saddle riding type vehicle according to any one of claims 1 to 11, comprising:
a fuel tank (43) disposed rearward of the head tube (13); and
a cover member (81) for covering at least part of side surfaces of the fuel tank (43);
wherein, as seen from the side, a lower edge (E) of the upper fender (25) and an upper edge (M) of the cover member (81) are substantially parallel;
the cover member (81) has inlet ports (P) for introducing streams of air;
the inlet ports (P) being formed in a front part of the cover member (81) to supply the streams of air between the cover member (81) and the fuel tank (43);
the cover member (81) includes:
a first ridge line (N1); and
a second ridge line (N2) formed below the first ridge line (N1);
the lower fender (23) includes a ridge line (K); and
as seen from the side, the second ridge line (N2) is substantially parallel to the ridge line (K) of the lower fender (23).

## Patentansprüche

1. Sattelfahrzeug, umfassend:
ein Steuerrohr (13);
eine Vorderradgabel (17), drehbar gehalten von dem Steuerrohr (13);
ein Lenker (19), gehalten von dem oberen Teil der Vorderradgabel (17);
ein Vorderrad (21), gehalten von dem unteren Teil der Vorderradgabel (17);
ein unteres Schutzblech (23), gehalten von der Vorderradgabel (17) zum Abdecken eines Bereichs oberhalb des Vorderrads (21);
ein oberes Schutzblech (25), gehalten von der Vorderradgabel (17) und angeordnet über dem unteren Schutzblech (23); und
eine Scheinwerfereinheit (27), gehalten von der Vorderradgabel (17);
wobei das Vorderrad (21), das untere Schutzblech (23), das obere Schutzblech (25) und die Scheinwerfereinheit (27) durch die Betätigung des Lenkers (19) integral drehbar sind;
die Scheinwerfereinheit (27) und das obere Schutzblech (25) getrennte Bestandteile sind;
sich das obere Schutzblech (25), wie von einer Seite aus ersichtlich, weiter nach vorne und nach unten als die Scheinwerfereinheit (27) erstreckt;
sich das obere Schutzblech (25), wie von der Seite aus ersichtlich, weiter nach hinten als die Scheinwerfereinheit (27) erstreckt; und
das obere Schutzblech (25), wie von vorne ersichtlich, einen unteren Teil, einen rechten Teil und einen linken Teil der Scheinwerfereinheit (27) umgibt;
**dadurch gekennzeichnet, dass**
das obere Schutzblech (25) einen hinteren Raum (S) hinter dem hinteren Teil der Scheinwerfereinheit (27) definiert, wobei der hintere Raum (S) an den hinteren Teil der Scheinwerfereinheit (27) angrenzt, und das obere Schutzblech (25) daran angepasst ist, Ströme von Luft zu dem hinteren Raum (S) hinter dem hinteren Teil der Scheinwerfereinheit (27) zu leiten; und
ein vorderes Ende (25F) des oberen Schutzblechs (25) weiter hinten als ein vorderes Ende (23F) des unteren Schutzblechs (23) liegt.

2. Sattelfahrzeug nach Anspruch 1, wobei das obere Schutzblech (25) einschließt:
einen Flansch (51), der sich, wie von der Seite aus ersichtlich, weiter nach vorne und nach unten als die Scheinwerfereinheit (27) erstreckt; und
Seitenwände (54), um mindestens einen Teil der Seitenflächen der Scheinwerfereinheit (27) zu bedecken, wobei, wie von der Seite aus ersichtlich, sich die Seitenwände (54) weiter nach hinten erstrecken als die Scheinwerfereinheit (27).

3. Sattelfahrzeug nach Anspruch 2, wobei, wie von der Seite aus ersichtlich, sich der Flansch (51) zum vorderen Ende (25F) hin verjüngt.

4. Sattelfahrzeug nach Anspruch 2 oder 3, wobei:
das obere Schutzblech (25) obere Wände (55) zum Bedecken von mindestens einem Teil einer oberen Fläche der Scheinwerfereinheit (27) einschließt;
wobei sich die oberen Wände (55) in der Draufsicht weiter nach hinten als die Scheinwerfereinheit (27) erstrecken.

5. Sattelfahrzeug nach einem der Ansprüche 1 bis 4, wobei:
eine Lücke (G) zwischen dem oberen Schutzblech (25) und der Scheinwerfereinheit (27) ausgebildet ist; und
das obere Schutzblech (25) daran angepasst ist, Luftströme, die in die Lücke (G) eingeströmt sind, zu dem hinteren Raum (S) hinter dem hinteren Teil der Scheinwerfereinheit (27) zu leiten.

6. Sattelfahrzeug nach Anspruch 5, das einen optischen Achsenversteller (73) zum Einstellen einer Richtung einer optischen Achse der Scheinwerfereinheit (27) umfasst;
wobei der optischen Achsenversteller (73) durch die Lücke (G) sichtbar ist.

7. Sattelfahrzeug nach einem der Ansprüche 1 bis 6, wobei:
das untere Schutzblech (23) Kammlinien (K) aufweist; und
wie von den Seiten aus ersichtlich, untere Kanten (E) des oberen Schutzblechs (25) im Wesentlichen parallel zu den Kammlinien (K) des unteren Schutzbleches (23) verlaufen.

8. Sattelfahrzeug nach einem der Ansprüche 1 bis 7, das Blinker (28) umfasst, die von der Vorderradgabel (17) gehalten werden;
wobei die Blinker (28) mit dem Vorderrad (21), dem unteren Schutzblech (23), dem oberen Schutzblech (25) und der Scheinwerfereinheit (27) durch die Betätigung des Lenkers (19) integral drehbar sind.

9. Sattelfahrzeug nach einem der Ansprüche 1 bis 8, das einen Scheinwerferträger (91) zum Halten der Scheinwerfereinheit (27) umfasst;
wobei der Scheinwerferträger (91) an der Vorderradgabel (17) befestigt ist.

10. Sattelfahrzeug nach Anspruch 9, wobei der Scheinwerferträger (91) die Scheinwerfereinheit (27) hält, um in der Lage zu sein, die Richtung einer optischen Achse der Scheinwerfereinheit (27) einzustellen.

11. Sattelfahrzeug nach Anspruch 9 oder 10, wobei der Scheinwerferträger (91) des Weiteren das obere Schutzblech (25) hält.

12. Sattelfahrzeug nach einem der Ansprüche 1 bis 11, umfassend:
einen Kraftstofftank (43), hinter der Vorderradgabel (13) angeordnet; und
ein Abdeckelement (81) zum Abdecken von zumindest einem Teil der Seitenflächen des Kraftstofftanks (43);
wobei, wie von der Seite aus ersichtlich, eine untere Kante (E) des oberen Schutzblechs (25) und eine obere Kante (M) des Abdeckelements (81) im Wesentlichen parallel verlaufen;
das Abdeckelement (81) Einlassöffnungen (P) zum Einleiten von Luftströmen aufweist;
die Einlassöffnungen (P) in einem vorderen Teil des Abdeckelements (81) ausgebildet sind, um die Luftströme zwischen dem Abdeckelement (81) und dem Kraftstofftank (43) zuzuführen;
das Abdeckelement (81) einschließt:
eine erste Kammlinie (N1); und
eine unterhalb der ersten Kammlinie (N1) ausgebildete zweite Kammlinie (N2);
wobei das untere Schutzblech (23) eine Kammlinie (K) einschließt; und
wie von der Seite aus ersichtlich, die zweite Kammlinie (N2) im Wesentlichen parallel zu der Kammlinie (K) des unteren Schutzblechs (23) verläuft.

## Revendications

1. Véhicule de type à selle comprenant:
un tube de direction (13);
une fourche avant (17) prise en charge de manière rotative par le tube de direction (13);
un guidon (19) supporté par une partie supérieure de la fourche avant (17);
une roue avant (21) prise en charge par une partie inférieure de la fourche avant (17);
un garde-boue inférieur (23) pris en charge par la fourche avant (17) pour recouvrir une zone située au-dessus de la roue avant (21);
un garde-boue supérieur (25) pris en charge par la fourche avant (17) et disposé au-dessus du garde-boue supérieur (23); et
une unité de phare (27) prise en charge par la fourche avant (17);
dans lequel la roue avant (21), le garde-boue inférieur (23), le garde-boue supérieur (25) et l'unité de phare (27) sont d'un seul tenant avec le fonctionnement rotatif du guidon (19);
l'unité de phare (27) et le garde-boue supérieur (25) sont des composants distincts;
vu d'un côté, le garde-boue supérieur (25) s'étend plus loin vers l'avant et vers le bas que l'unité de phare (27);
vu du côté, le garde-boue supérieur (25) s'étend plus loin vers l'arrière que l'unité de phare (27);
et
vu de l'avant, le garde-boue supérieur (25) entoure une partie inférieure, une partie droite et une partie gauche de l'unité de phare (27);
**caractérisé en ce que**
le garde-boue supérieur (25) définit un espace arrière (S) vers l'arrière de la partie arrière de l'unité de phare (27), l'espace arrière (S) adjacent à la partie arrière de l'unité de phare (27), et le garde-boue supérieur (25) est prévu pour guider les flux d'air vers ledit espace arrière (S) vers l'arrière de la partie arrière de l'unité de phare (27); et
une extrémité avant (25F) du garde-boue supérieur (25) est située plus loin vers l'arrière qu'une extrémité avant (23F) du garde-boue inférieur (23).

2. Véhicule de type à selle selon la revendication 1, dans lequel le garde-boue supérieur (25) inclut:
une bride (51) s'étend plus vers l'avant et vers le bas que l'unité de phare (27), vu de côté; et
des parois latérales (54) pour recouvrir au moins une partie des surfaces latérales de l'unité de phare (27)
vu du côté, les parois latérales (54) s'étendant plus vers l'arrière que l'unité de phare (27).

3. Véhicule de type à selle selon la revendication 2, dans lequel, vu du côté, la bride (51) se rétrécit vers l'extrémité avant (25F).

4. Véhicule de type à selle selon la revendication 2, dans lequel:
le garde-boue supérieur (25) inclut des parois supérieures (55) pour recouvrir au moins une partie de la surface supérieure de l'unité de phare (27);
en vue en plan, les parois supérieures (55) s'étendent plus loin vers l'arrière que l'unité de phare (27).

5. Véhicule de type à selle selon l'une quelconque des revendications 1 à 4, dans lequel:
un espace (G) est formé entre le garde-boue supérieur (25) et l'unité de phare (27); et
le garde-boue supérieur (25) est prévu pour guider les flux d'air qui se sont écoulés dans l'espace (G) vers ledit espace arrière (S) vers l'arrière de la partie arrière de l'unité de phare (27).

6. Véhicule de type à selle selon la revendication 5, comprenant un dispositif de réglage d'axe optique (73) pour régler une direction d'un axe optique de l'unité de phare (27);
le dispositif de réglage d'axe optique (73) étant visible à travers l'espace (G).

7. Véhicule de type à selle selon l'une quelconque des revendications 1 à 6, dans lequel:
le garde-boue inférieur (23) présent des lignes de crête (K); et
vu des côtés, les bords inférieurs (E) du garde-boue supérieur (25) sont sensiblement parallèles aux lignes de crête (K) du garde-boue inférieur (23).

8. Véhicule de type à selle selon l'une quelconque des revendications 1 à 7, comprenant des clignotants (28) pris en charge par la fourche avant (17); dans les clignotants (28) sont rotatifs d'un seul tenant avec la roue avant (21), le garde-boue inférieur (23), le garde-boue supérieur (25) et l'unité de phare (27) avec le fonctionnement rotatif du guidon (19).

9. Véhicule de type à selle selon l'une quelconque des revendications 1 à 8, comprenant un support de phare (91) pour prendre en charge l'unité de phare (27);
dans lequel le support de phare (91) est fixé à la fourche avant (17).

10. Véhicule de type à selle selon la revendication 9, dans lequel le support de phare (91) prend en charge l'unité de phare (27) afin de régler une direction d'un axe optique de l'unité de phare (27).

11. Véhicule de type à selle selon la revendication 9 ou la revendication 10, dans lequel le support de phare (91) prend en charge en outre le garde-boue supérieur (25).

12. Véhicule de type à selle selon l'une quelconque des revendications 1 à 11, comprenant:
un réservoir de carburant (43) disposé à l'arrière du tube de direction (13); et
un élément de couverture (81) pour recouvrir au moins une partie des surfaces latérales du réservoir de carburant (43);
dans lequel, vu du côté, un bord inférieur (E) du garde-boue supérieur (25) et un bord supérieur (M) de l'élément de couverture (81) sont sensiblement parallèles;
l'élément de couverture (81) comporte des orifices d'entrée (P) pour introduire des flux d'air;
les orifices d'entrée (P) étant formés dans une partie avant de l'élément de couverture (81) pour fournir les flux d'air entre l'élément de couverture (81) et le réservoir de carburant (43);
l'élément de couverture (81) inclut:
une première ligne de crête (N1); et
une seconde ligne de crête (N2) formée sous la première ligne de crête (N1);
le garde-boue inférieur (23) inclut une ligne de crête (K); et
vu du côté, la seconde ligne de crête (N2) est sensiblement parallèle à la ligne de crête (K) du garde-boue inférieur (23).
